# EUROPÄISCHE PATENTSCHRIFT

(11) **EP 3 515 776 B1**
(45) Veröffentlichungstag und Bekanntmachung des Hinweises auf die Patenterteilung: **14.10.2020**
(21) Anmeldenummer: 17757537.0
(22) Anmeldetag: 24.08.2017
(51) Int. Cl.: B60T 17/00

(54) **LUFTAUFBEREITUNGSEINHEIT FÜR EINE BREMSANLAGE EINES NUTZFAHRZEUGS UND VERFAHREN ZUM BETREIBEN EINER LUFTAUFBEREITUNGSEINHEIT**
AIR TREATMENT DEVICE FOR UTILITY VEHICLE AND METHOD TO RUN THE AIR TREATMENT DEVICE
UNITÉ DE CONDITIONNEMENT D'AIR POUR UN DISPOSITIF DE FREINAGE D'UN VÉHICULE UTILITAIRE ET PROCÉDÉ POUR FAIRE FONCTIONNER UNE UNITÉ DE CONDITIONNEMENT D'AIR

(30) Priorität: 21.09.2016 DE 102016117836
(43) Veröffentlichungstag der Anmeldung: 31.07.2019
(73) Patentinhaber: KNORR-BREMSE Systeme für Nutzfahrzeuge GmbH, 80809 München (DE)
(72) Erfinder: MICHALSKI, Max, 85579 Neubiberg (DE); LEINUNG, Andreas, 81245 München (DE)
(86) Internationale Anmeldenummer: PCT/EP2017/071286
(87) Internationale Veröffentlichungsnummer: WO 2018/054645

(56) Entgegenhaltungen:
- EP-A1- 1 552 996
- EP-A2- 0 278 228
- DE-A1- 10 207 803
- DE-A1-102013 006 860
- DE-C1- 4 115 356

## Beschreibung

Die vorliegende Erfindung bezieht sich auf eine Luftaufbereitungseinheit für eine Bremsanlage eines Nutzfahrzeugs und auf ein Verfahren zum Betreiben einer Luftaufbereitungseinheit.

Ein Nutzfahrzeug kann eine mittels eines elektronischen Bremssystems automatisch steuerbare Bremsanlage aufweisen. Bei Ausfall des elektronischen Bremssystems kann die automatische Steuerung der Bremsanlage beispielsweise durch eine redundante Steuerelektronik mit separater Stromversorgung aufrechterhalten werden.

Die Druckschrift EP 1 552 996 A1 offenbart ein Verfahren und eine Vorrichtung zum Regeln des Druckes in einem elektronisch gesteuerten Bremssystem (EBS) eines Fahrzeugs.

Vor diesem Hintergrund werden mit dem hier vorgestellten Ansatz eine Luftaufbereitungseinheit für eine Bremsanlage eines Nutzfahrzeugs, ein Verfahren zum Betreiben einer Luftaufbereitungseinheit sowie ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird eine Luftaufbereitungseinheit für eine Bremsanlage eines Nutzfahrzeugs vorgestellt, wobei die Luftaufbereitungseinheit folgende Merkmale aufweist:
einen Fußbremsmodulanschluss zum pneumatischen und/oder elektrischen Koppeln der Luftaufbereitungseinheit mit einem Fußbremsmodul einer Bremsanlage des Nutzfahrzeugs;
zumindest eine Ventileinheit zum Beaufschlagen des Fußbremsmodulanschlusses mit einem Steuerdruck; und
ein Steuergerät zum Ansteuern der Ventileinheit, wobei das Steuergerät mit zumindest einem Raddrehzahlsensor des Nutzfahrzeugs koppelbar ist und ausgebildet ist, um unter Verwendung eines von dem Raddrehzahlsensor erzeugten Raddrehzahlsensorsignals die Ventileinheit und/oder zumindest ein Steuerventil eines Antiblockiersystems des Nutzfahrzeugs anzusteuern,
wobei das Steuergerät zum Einlesen/Abgreifen von Drehzahlsignalen desselben Raddrehzahlsensors ausgebildet ist, der Drehzahlsignale an ein ABS -/oder EBS-System des Nutzfahrzeugs liefert.

Unter einer Luftaufbereitungseinheit kann eine Einheit zum Reinigen oder Trocknen von Luft zum Betreiben der Bremsanlage verstanden werden. Beispielsweise kann es sich bei der Luftaufbereitungseinheit um eine elektronische Luftaufbereitungseinheit (EAC) handeln. Unter einem Nutzfahrzeug kann beispielsweise ein Lastkraftwagen, ein Omnibus, eine Zugmaschine oder ein Kranwagen verstanden werden. Beispielsweise kann es sich bei dem Nutzfahrzeug um ein teil- oder vollautomatisiert fahrendes Fahrzeug handeln. Das Nutzfahrzeug kann beispielsweise mit einem Antiblockiersystem (ABS) oder einem elektronischen Bremssystem (EBS) ausgestattet sein. Unter einem Fußbremsmodul kann eine mit einem Fußpedal ausgestattete Komponente der Bremsanlage zum Betätigen der Bremsanlage durch einen Fahrer verstanden werden. Unter einem Steuerdruck kann beispielsweise ein von einem Betriebsdruck der Bremsanlage abweichender Druck verstanden werden. Insbesondere kann der Steuerdruck kleiner als der Betriebsdruck sein. Bei der Ventileinheit kann es sich beispielsweise um ein elektrisch ansteuerbares Magnetventil handeln. Unter einem Steuergerät kann ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Denkbar ist ferner, das eine über eine Luftaufbereitungs-Gehäuseschnittstelle elektrisch angesteuerte externe Ventilgruppe, die ihrerseits das Fussbremsmodul pneumatisch ansteuert, ebenfalls mit einem hier vorgestellten Ansatz realisierbar ist.

Der hier vorgestellte Ansatz beruht auf der Erkenntnis, dass ein Fußbremsmodul einer Bremsanlage eines Nutzfahrzeugs mittels einer Luftaufbereitungseinheit der Bremsanlage bei Ausfall eines elektronischen Bremssystems pneumatisch angesteuert werden kann. So kann mit verhältnismäßig geringem Zusatzaufwand eine redundante Bremsfunktion der Bremsanlage realisiert werden, die sich beispielsweise im Zusammenhang mit autonomem Fahren als Rückfallebene nutzen lässt.

Erfindungsgemäß ist das Steuergerät mit zumindest einem Raddrehzahlsensor des Nutzfahrzeugs koppelbar und ausgebildet um unter Verwendung eines von dem Raddrehzahlsensor erzeugten Raddrehzahlsensorsignals die Ventileinheit oder, zusätzlich oder alternativ, zumindest ein Steuerventil eines Antiblockiersystems des Nutzfahrzeugs anzusteuern. Unter einem Raddrehzahlsensor kann beispielsweise ein Polradsensor verstanden werden. Das Raddrehzahlsensorsignal kann eine Drehzahl eines einzelnen Rads des Nutzfahrzeugs repräsentieren. Das Steuerventil kann beispielsweise einem einzelnen Radbremszylinder der Bremsanlage vorgeschaltet sein. Durch diese Ausführungsform wird ein gezieltes Abbremsen einzelner Räder des Nutzfahrzeugs mittels der Luftaufbereitungseinheit ermöglicht. Dadurch kann vermieden werden, dass die Räder des Nutzfahrzeugs beim Abbremsen blockieren. Als eine Vorstufe der Nutzung des Drehzahlsignals wäre die Regelung nah heran an das Blockieren ohne Nutzung der ABS-Ventile nur achsweise über das Fussbremsmodul. Ein möglicher Nachteil wäre dann allerdings, dass zum einen nur auf das Rad mit dem niedrigeren Haftreibwert geregelt werden kann, was den Bremsweg verlängert. Gleichzeitig sollte dann auch noch wegen des über das Fussbremsmodul festgesetzten Verhältnisses von Vorderachs- zu Hinterachsdruck auf die Achse mit dem niedrigen Reibwert geregelt werden, was nochmals suboptimal wäre.

Hierbei kann das Steuergerät ausgebildet sein, um die Ventileinheit oder, zusätzlich oder alternativ, das Steuerventil unter Verwendung des Raddrehzahlsensorsignals derart anzusteuern, dass das Nutzfahrzeug einseitig abgebremst und/oder gelenkt wird. Dadurch kann eine Lenkbremsfunktion mittels der Luftaufbereitungseinheit realisiert werden.

Des Weiteren kann die Luftaufbereitungseinheit eine Verteilereinheit zum Verteilen von von der Luftaufbereitungseinheit aufbereiteter Luft auf zumindest einen einer Betriebsbremse der Bremsanlage zugeordneten Bremskreis und zumindest eine Verbindungsleitung zum Verbinden der Verteilereinheit mit dem Fußbremsmodulanschluss aufweisen. Die Ventileinheit kann in der Verbindungsleitung angeordnet sein. Insbesondere kann die Verbindungsleitung Teil des Bremskreises sein. Unter einer Betriebsbremse kann eine auf alle Räder des Nutzfahrzeugs wirkende Bremse verstanden werden. Die Betriebsbremse kann beispielsweise separate Bremskreise für eine Vorderachse und eine Hinterachse des Nutzfahrzeugs umfassen. Bei der Verteilereinheit kann es sich um ein Bauteil mit einem Lufteinlass zum Einlassen der aufbereiteten Luft und zumindest einem mit dem Lufteinlass verbundenen Ausgang zum Anschließen der Verteilereinheit an den Bremskreis handeln. Je nach Ausführungsform kann die Verteilereinheit eine Mehrzahl von Ausgängen zum Anschließen der Verteilereinheit an mehrere Bremskreise, etwa auch an einen Park- oder Anhängerbremskreis, aufweisen. Durch diese Ausführungsform kann eine zuverlässige Beaufschlagung des Fußbremsmodulanschlusses mit dem Steuerdruck sichergestellt werden. Ferner wird dadurch eine verhältnismäßig einfache Integration der Ventileinheit in das pneumatische System der Luftaufbereitungseinheit ermöglicht, was die Herstellungskosten der Luftaufbereitungseinheit senkt. Denkbar ist jedoch ferner auch, dass der Fussbremsmodulanschluss sowie die dazwischenliegende Ventileinheit gleichzeitig noch mit dem Vorratsbehälter dieses Verbraucherkreises verbunden sind. Diese Verbindung ist funktional ebenfalls relevant, weil hinter dem ausgesteuerten Druck ein Volumen steht, damit bei gewünschtem Druckanstieg der Druck vor dem Steuerventil nicht einbricht. Insofern ist für die Funktion auch das Volumen eines Vorratsbehälters relevant, das vor und in der Verteilereinheit nicht vorliegt. Denkbar ist ferner auch eine von der Luftaufbereitung elektrisch angesteuerte, aber außerhalb des Aufbereitungsgehäuses mit Vorratsdruckluft versorgte Ventileinheit.

Es ist ferner vorteilhaft, wenn das Steuergerät ausgebildet ist, um die Ventileinheit ansprechend auf einen Ausfall eines elektronischen Bremssystems des Nutzfahrzeugs anzusteuern. Dadurch kann auch bei Ausfall des elektronischen Bremssystems eine ausreichende Bremsleistung der Bremsanlage sichergestellt werden. Nachdem das elektronische Bremssystem (EBS) und die Steuerung der Betriebsbremse über das Fussbremsmodul (FBM) und die elektronische Luftaufbereitung/Electronic Air Control kurz EAC, funktional gleichwertig sind, könnteim Fall des autonomen Fahrens normalerweise mit dem EAC/FBM zu bremsen und bei Ausfall dieses Systems mit dem EBS) realisiert werden.

Gemäß einer weiteren Ausführungsform kann die Luftaufbereitungseinheit zumindest einen Zusatzanschluss zum pneumatischen Koppeln der Luftaufbereitungseinheit mit einem Park- und/oder Anhängerbremskreis der Bremsanlage und zumindest eine Zusatzventileinheit zum Beaufschlagen des Zusatzanschlusses mit einem Zusatzsteuerdruck aufweisen. Entsprechend kann das Steuergerät ausgebildet sein, um ferner die Zusatzventileinheit anzusteuern. Dadurch kann die Zuverlässigkeit der Bremsanlage weiter erhöht werden.

Der hier vorgestellte Ansatz schafft zudem ein Verfahren zum Betreiben einer Luftaufbereitungseinheit gemäß einer der vorstehenden Ausführungsformen, wobei das Verfahren folgenden Schritt umfasst:
Erzeugen eines Steuersignals, um die Ventileinheit derart anzusteuern, dass der Fußbremsmodulanschluss mit dem Steuerdruck beaufschlagt wird.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
Fig. 1A eine schematische Darstellung einer Bremsanlage mit einer Luftaufbereitungseinheit gemäß einem Ausführungsbeispiel;
Fig. 1B eine schematische Darstellung einer Ventileinheit für eine Luftaufbereitungseinheit gemäß einem Ausführungsbeispiel;
Fig. 2 eine schematische Darstellung einer Bremsanlage mit einer Luftaufbereitungseinheit gemäß einem Ausführungsbeispiel;
Fig. 3 eine schematische Darstellung eines Steuergeräts gemäß einem Ausführungsbeispiel; und
Fig. 4 ein Ablaufdiagramm eines Verfahrens gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

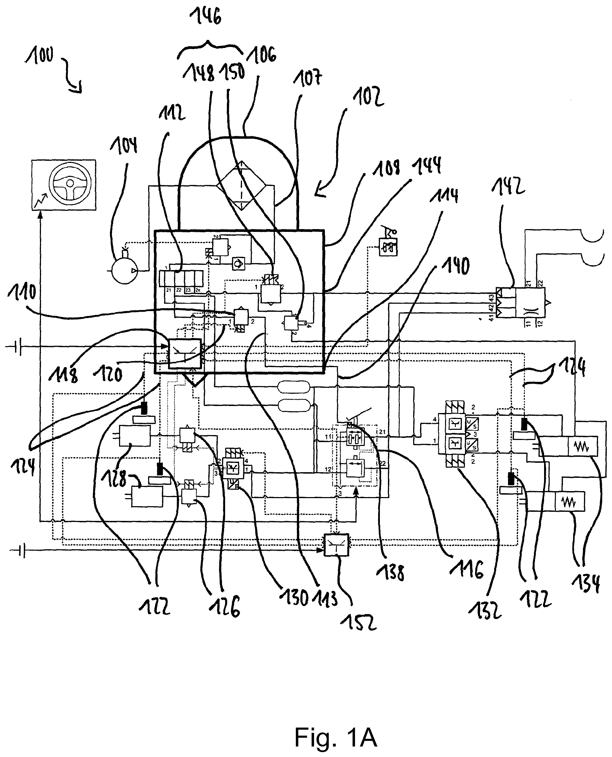

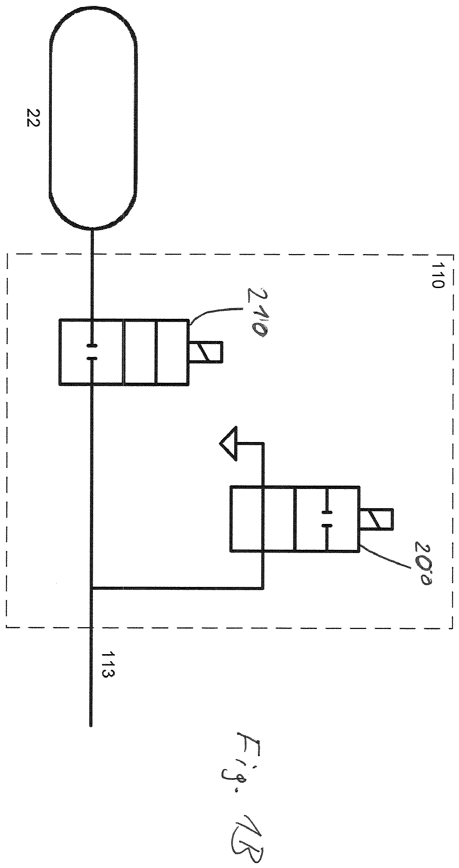

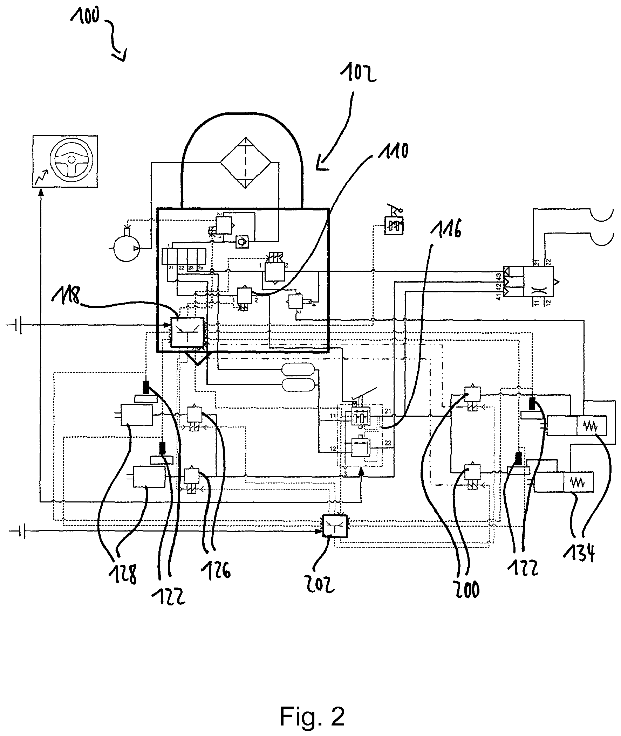

In den nachfolgend beschriebenen Figuren 1 und 2 sind Leitungen zur elektrischen Signalübertragung mit gepunkteten Linien, pneumatische Leitungen mit durchgehenden Linien und Leitungen zur Übertragung elektrischer Energie mit pfeilförmigen Linien angedeutet. Optionale Verbindungen sind durch teils gestrichelte, teils gepunktete Linien angedeutet.

**Fig. 1A** zeigt eine schematische Darstellung einer Bremsanlage 100 eines Nutzfahrzeugs mit einer Luftaufbereitungseinheit 102 gemäß einem Ausführungsbeispiel. Die Luftaufbereitungseinheit 102 umfasst eine mit einem Kompressor 104 verbundene Filterkartusche 106 zum Filtern und Trocknen einer von dem Kompressor 104 bereitgestellten Druckluft. Die Filterkartusche 106 ist an einem Gehäuse 108 der Luftaufbereitungseinheit 102 angeordnet und über eine Filterkartuschenleitung 107 mit dem Gehäuse 108 pneumatisch verbunden. In dem Gehäuse 108 ist eine Ventileinheit 110 angeordnet beispielsweise als Kombination zweier Magnetventile 200 und 210 angedeutet (mit denen die drei Zustände Druckaufbau, Konstanthalten des Drucks und Druckabbau möglich sind.

Fig. 1B zeigt eine derartig ausgestaltete Ventileinheit 110 bei der im unbestromten Zustand aufgrund der Anordnung der beiden Magnetventile 200 normal offen (normally open) und 210 normal geschlossen (normally closed) die Leitung 113 entlüftet wird, was systembedingt notwendig ist, damit im Normalfall, d. h., im Fall, dass die Ventileinheit 110 unbestromt ist, das automatische Bremssystem den Fahrerwunsch nicht überlagert). Die Ventileinheit 110 ist über eine Verteilereinheit 112 mit der Filterkartuschenleitung 107 verbunden. Eine Verbindungsleitung 113 verbindet die Verteilereinheit 112 mit einem Fußbremsmodulanschluss 114 des Gehäuses 108. Dabei ist die Ventileinheit 110 in der Verbindungsleitung 113 angeordnet. Beispielhaft ist die Verbindungsleitung 113 als Teil eines einer Betriebsbremse der Bremsanlage 100 zugeordneten Bremskreises ausgeführt. Über den Fußbremsmodulanschluss 114 ist ein Fußbremsmodul 116 der Bremsanlage 100 an die Luftaufbereitungseinheit 102 angeschlossen. Die Ventileinheit 110 ist ausgebildet, um den Fußbremsmodulanschluss 114 mit einem Steuerdruck zum pneumatischen Ansteuern des Fußbremsmoduls 116 zu beaufschlagen. Ein ebenfalls in dem Gehäuse 108 angeordnetes Steuergerät 118 ist ausgebildet, um die Ventileinheit 110 durch Ausgeben eines entsprechenden Steuersignals 120 anzusteuern.

Gemäß diesem Ausführungsbeispiel ist das Steuergerät 118 beispielhaft mit insgesamt vier Raddrehzahlsensoren 122 zum Erfassen einer Drehzahl je eines Rades des Nutzfahrzeugs gekoppelt. Die Raddrehzahlsensoren 122 senden je ein Raddrehzahlsensorsignal 124, das die jeweilige Drehzahl der Räder repräsentiert, an das Steuergerät 118, wobei das Steuergerät 118 ausgebildet ist, um die Ventileinheit 110 unter Verwendung der Raddrehzahlsensorsignale 124, d. h. in Abhängigkeit von der jeweiligen Drehzahl der Räder, anzusteuern.

Das Nutzfahrzeug ist mit einem Antiblockiersystem ausgestattet, das gemäß Fig. 1 beispielhaft zwei Steuerventile 126 zum Steuern einer Druckluftzufuhr zu je einem von zwei Vorderachsenbremszylindern 128 einer Vorderachse des Nutzfahrzeugs umfasst. Gemäß einem Ausführungsbeispiel ist das Steuergerät 118 ausgebildet, um die Steuerventile 126 unter Verwendung der Raddrehzahlsensorsignale 124 direkt elektrisch anzusteuern, insbesondere derart, dass beim Abbremsen des Nutzfahrzeugs über das Fußbremsmodul 116 ein Blockieren der Vorderräder vermieden wird. Alternativ erfolgt die Ansteuerung der Steuerventile 126 durch das Steuergerät 118 derart, dass das Nutzfahrzeug einseitig abgebremst wird. Auf diese Weise kann mittels der Luftaufbereitungseinheit 102 eine Lenkbremsfunktion realisiert werden.

Das Fußbremsmodul 116 ist über ein Vorderachsenventilmodul 130, das den beiden Steuerventilen 126 vorgeschaltet ist, mit den zwei Vorderachsenbremszylindern 128 pneumatisch gekoppelt und über ein Hinterachsenventilmodul 132 mit zwei Hinterachsenbremszylindern 134 zum Abbremsen je eines Hinterrads des Nutzfahrzeugs pneumatisch gekoppelt. Beispielhaft sind die beiden Hinterachsenbremszylinder 134 ausgebildet, um die Hinterräder im entlüfteten Zustand mittels Federkraft zu blockieren. Hierbei sind sogenannte Kombi-Bremszylinder in der Fig. 1A dargestellt, die einen ersten Eingang (hier links) zum Betätigen des Betriebsbremszylinders mit (Über-) Druck und ohne Federkraft und einen zweiten Eingang zum Betätigen des Feststellbremszylinders zum Lösen der Parkbrems-Federkraft unter Druck bzw. Einlegen der Parkbremse ohne Druck über die Federkraft aufweisen. Die Hinterachsenbremszylinder 134 fungieren somit sowohl als Betriebsbremse als auch als Feststell- oder Parkbremse. Die Bereitstellung eines entsprechenden Betriebsdrucks zum Betätigen der vier Bremszylinder 132, 134 erfolgt über die Verteilereinheit 112, die parallel zum Fußbremsmodulanschluss 114 über entsprechende Pneumatikleitungen mit dem Fußbremsmodul 116 verbunden ist. Das Fußbremsmodul 116 weist einen separaten Steueranschluss 138 auf, der über eine Steuerleitung 140 mit dem Fußbremsmodulanschluss 114 pneumatisch gekoppelt ist.

Beispielhaft ist das Fußbremsmodul 116 gemäß Fig. 1A mit einem Anhängerventilmodul 142 zum Beaufschlagen der Anhängerbremse mit einem entsprechenden Steuerdruck verbunden. Als Anhänger- und Feststellbremskreis wird hierbei oft die gesamte Verbraucherleitung bezeichnet, die beginnend vom Mehrkreisschutzventil bzw. der Verteilereinheit 112 als Kreis 23 zur einerseits zur Steuerleitung des Anhängersteuermoduls 142 und andererseits zur Feststellbremse des Zugfahrzeugs führt, die, wie in der Fig. 1A zu sehen, über das Magnetventil 148 und das Relaisventil 150 zu den Feststellbremszylindern führt. Dabei ist das Anhängerventilmodul 142 über einen Zusatzanschluss 144 des Gehäuses 108 mit einer im Gehäuse 108 angeordneten Zusatzventileinheit 146 pneumatisch gekoppelt, wobei diese Zusatzventileinheit gleich der elektrischen Parkbremse entspricht. Die Zusatzventileinheit 146 ist ihrerseits an die Verteilereinheit 112 angeschlossen. Beispielhaft ist die Zusatzventileinheit 146 über eine Magnetventileinheit mit drei schaltbaren Magnetventilen und einem Relaisventil 150 realisiert. Die Einkerbung im rechten elektrischen Steueranschluss der Magnetventileinheit soll in diesem Zusammenhang die Bistabilität der elektrischen Parkbremse andeuten, die also stabil sowohl in der Park- als auch in der gelösten Stellung ist, wobei es sich nicht um ein bistabiles Magnetventil handeln braucht. Es kann auch eine über drei Magnetventile vorgesteuerte pneumatisch bistabile Parkbremse realisiert sein. Das Relaisventil 150 ist zusätzlich mit den beiden Hinterachsenbremszylindern 134 pneumatisch gekoppelt. Das Magnetventil 148 steuert insofern das luftmengenverstärkend wirkende Relaisventil vor, sodass der von der Elektronik 118 geregelte Drucksollwert auch mit ausreichend schnellem Luftmengenstrom in den großen Bremszylindern eingeregelt werden kann. Das Relaisventil 150 folgt pneumatisch-mechanisch mit großem Querschnitt dem Sollwert, der an seinem Steueranschluss eingesteuert wird.

Die in Fig. 1A gezeigte Bremsanlage 100 ist durch ein elektronisches Bremssystem, kurz EBS, automatisch ansteuerbar. Das elektronische Bremssystem umfasst ein EBS-Steuergerät 152, das zur elektrischen Signalübertragung beispielhaft mit dem Fußbremsmodul 116, dem Vorderachsenventilmodul 130 sowie den vier Raddrehzahlsensoren 122 verbunden ist.

Gemäß einem Ausführungsbeispiel ist das Steuergerät 118 ausgebildet, um die Ventileinheit 110 bei Ausfall des elektronischen Bremssystems anzusteuern.

**Fig. 2** zeigt eine schematische Darstellung einer Bremsanlage 100 für ein Nutzfahrzeug mit einer Luftaufbereitungseinheit 102 gemäß einem Ausführungsbeispiel. Die Bremsanlage 100 entspricht im Wesentlichen der vorangehend anhand von Fig. 1A beschriebenen Bremsanlage. Im Unterschied zu Fig. 1A ist in Fig. 2 ein Bremssystem dargestellt, dass nicht über das sogenannte EBS-verfügt, sondern ein einfaches Bremssystem mit ABS ist. Der "Hauptnutzen" des EBS ist die komfortable immer gleiche Bremsung des gesamten Bremssystems unabhängig vom Beladungszustand. Bei alten Bremssystemen, dem rein pneumatischen wie auch dem ABS-Bremssystem, hängt die Verteilung der Betriebsbremskraft an den nicht änderbaren Kennlinien "Pedalweg zu Solldrücken und" des Fussbremsmoduls. Stieg die Fahrzeugbeladung, so sollte der Fahrer deutlich stärker bremsen. Dieselbe Bremscharakteristik weist auch die in Figur 2 gezeigte Bremsanlage mit nur einem Antiblockiersystem auf. Blockieren einzelne Räder, weil der Fahrer zu stark bremst, kann aber auch mit einem ABS-System das Fahrzeug radindividuell abgebremst und insofern selbst auf Eis sicher zum Stehen gebracht werden. Insofern soll Figur 2 zeigen, dass die Erfindung auch für ein ABS geeignet ist. Hierbei umfasst das Antiblockiersystem gemäß Fig. 2 zusätzlich zu den zwei Steuerventilen 126 zwei weitere Steuerventile 200, die je einem der beiden Hinterachsenbremszylinder 134 vorgeschaltet sind. Es sollten immer alle Räder eines ABS-Systems geregelt werden. Beim EBS-System ist dies deshalb an der Hinterachse nicht notwendig, weil das Doppelkanal-Druckregelmodul ebenfalls radindividuell über seine beiden Kanäle die beiden Seiten der Hinterachse regeln kann. Die vier Steuerventile 126, 200 sind durch ein ABS-Steuergerät 202 ansteuerbar. Dabei sind wie in Fig. 1A die beiden Steuerventile 126 der Vorderachse zusätzlich über das Steuergerät 118 der Luftaufbereitungseinheit 102 ansteuerbar, etwa bei Ausfall des ABS-Steuergeräts 202. Optional sind auch die beiden weiteren Steuerventile 200 über das Steuergerät 118 ansteuerbar.

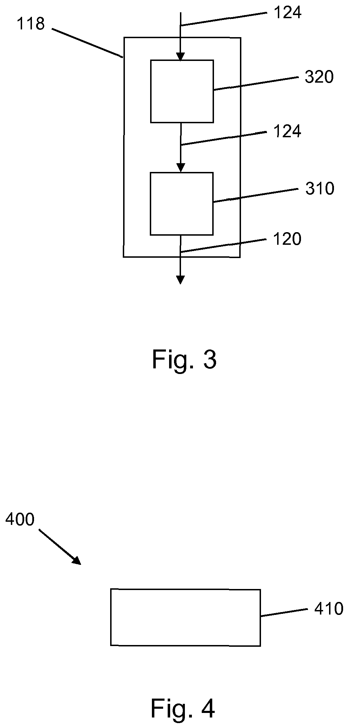

**Fig. 3** zeigt eine schematische Darstellung eines Steuergeräts 118 gemäß einem Ausführungsbeispiel, etwa eines vorangehend, anhand der Figuren 1A und 2 beschriebenen Steuergeräts. Das Steuergerät 118 umfasst eine Erzeugungseinheit 310 zum Erzeugen des Steuersignals 120. Optional umfasst das Steuergerät 118 eine Einleseeinheit 320 zum Einlesen der Raddrehzahlsensorsignale 124 und Weiterleiten der Raddrehzahlsensorsignale 124 an die Erzeugungseinheit 310. Dabei ist die Erzeugungseinheit 310 ausgebildet, um das Steuersignal 120 unter Verwendung der Raddrehzahlsensorsignale 124 zu erzeugen.

**Fig. 4** zeigt ein Ablaufdiagramm eines Verfahrens 400 zum Betreiben einer Luftaufbereitungseinheit gemäß einem Ausführungsbeispiel. Das Verfahren 400 kann beispielsweise im Zusammenhang mit einem vorangehend anhand der Figuren 1 bis 3 beschriebenen Steuergerät durchgeführt werden. Das Verfahren 400 umfasst einen Schritt 410, in dem das Steuersignal zum Ansteuern der Ventileinheit der Luftaufbereitungseinheit erzeugt wird.

Nachfolgend werden verschiedene Ausführungsbeispiele des hier vorgestellten Ansatzes nochmals mit anderen Worten beschrieben.

Der hier vorgestellte Ansatz ermöglicht die Entwicklung eines kostengünstigen automatischen Bremssystems unter Einbeziehung einer elektronischen Luftaufbereitung eines Nutzfahrzeugs. Insbesondere eignet sich der hier vorgestellte Ansatz dazu, um ausgehend von bisher bekannten Systemen eine für das autonome Fahren notwendige elektronische Redundanz des Bremssystems bereitzustellen. Unter autonomem Fahren kann ein elektronisch assistiertes Fahren bis hin zum vollständig eigenständigen Beschleunigen, Lenken und Bremsen des Fahrzeugs unabhängig von Fahrereingriffen verstanden werden.

Schon bekannte, einfachere Fahrerassistenzfunktionen sind zum Beispiel das Antiblockiersystem (ABS), der Bremsassistent, das elektronische Bremssystem (EBS) sowie Fahrzeugstabilisierungsfunktionen wie der Überrollschutz (Roll-Over-Protection). Der Fahrer ist dabei immer anwesend und auch verantwortlich und wird nur zur Erhöhung des Fahrkomforts und in kritischen Situationen elektronisch unterstützt.

Mit zunehmender Einflussnahme der Elektronik steigen auch die gesetzlich vorgeschriebenen Anforderungen an die Sicherheit bzw. die Redundanz elektronischer Systeme. Bei herkömmlichen elektronischen Bremssystemen kann die Batterieversorgung einfach ausgeführt sein. Als Rückfallebene für den Fall elektrischer Fehler lässt sich das Fahrzeug beispielsweise noch rein pneumatisch bremsen.

Im Fall stärker eingreifender Fahrerassistenzfunktionen mit eingeschränkter Fahreraufmerksamkeit, wie etwa Platooning, Stop-and-Go-Autorelease oder -Autopark oder eines Nothalteassistents, oder sogar ohne Fahreranwesenheit wie beim Yard-Maneuvering ist dies nicht mehr möglich, da die Rückfallebene ebenfalls intelligent arbeiten sollte.

Daher ist zumindest eine elektronische Rückfallebene erforderlich und es stellt sich die Frage, wie viele Komponenten des elektronischen Systems redundant sein sollten. Die Bremsleistung der Rückfallebene kann dabei durchaus geringer ausfallen, solange das Fahrzeug noch sicher beherrscht werden kann.

Insofern ist es die Aufgabe des hier vorgestellten Ansatzes, bei der Realisierung eines automatischen Bremssystems für das autonome Fahren eine gute Kombination aus kostengünstiger Nutzung schon vorhandener Komponenten, erforderlicher Bremsleistung bei Ausfall des ersten elektronischen Ebene des Bremssystems (also, wenn das zweite, redundante elektronische System die Bremsung übernehmen soll / also im Redundanzfall oder auch Backup-Fall genannt) und maximaler Sicherheit aufgrund des kürzest möglichen Bremswegs zu finden.

Die Anordnung der elektronischen Bremsansteuerung in die ohnehin vorhandene Luftaufbereitungseinheit 102 erspart den Einsatz von zusätzlichen Komponenten, die anderenfalls in unterschiedlcihen Baugruppen der Bremsansteuerungseinheit vorgesehen werden müssten. Somit kann die elektronische Bremssteuerung redundant auch in der elektronischen Luftaufbereitung vorhanden oder ausgebildet sein. Gleichzeitig können Synergien genutzt werden, die sich durch die in der Luftaufbereitungseinheit 102 befindlichen Komponenten ergeben, wie zum Beispiel die integrierte Parkbremse.

Die Luftaufbereitungseinheit 102 umfasst eine Ventileinheit 110, die bei Ausfall des elektronischen Bremssystems mit Software-Logik, implementiert in das ebenfalls in der Luftaufbereitungseinheit 102 angeordnete Steuergerät 118, unabhängig von einer Fahrervorgabe einen Druck für die beiden Betriebsbremskreise einsteuern, insbesondere erhöhen kann, sodass das Fahrzeug sicher zum Stehen gebracht werden kann, selbst wenn der Fahrer das Fahrzeug nicht mehr unter Kontrolle hat. Alternativ kann der Druck für die beiden Betriebsbremskreise über die Ventileinheit 110 je nach Ausführung des Steueranschlusses 138 des Fußbremsmoduls 116 auch vermindert werden.

Durch die Verlagerung dieser Rückfallebene in die Luftaufbereitungseinheit 102 kann der Änderungsaufwand an einem schon existierenden elektronischen Fußbremsmodul sehr gering gehalten werden. Es wird lediglich ein weiterer pneumatischer Steuereingang in Form des Steueranschlusses 138 geschaffen. Weitere Ventile, ein separates Steuergerät und eine damit verbundene Verkabelung können somit entfallen.

Im Unterschied zu rein elektronischen Fußbremsmodulen, bei denen ein elektronisches Bremssignal an elektronische Bremssteuergeräte übertragen wird, schafft der hier vorgestellte Ansatz eine pneumatische Rückfallebene für die Betriebsbremse, wodurch das automatische Bremskonzept sicherer wird, weil das Fahrzeug auch bei Ausfall beider Spannungsversorgungen bzw. beider elektronischer Systeme (die Ausfallursachen könnten in beiden Fällen außerhalb der Spannungsversorgungen liegen) noch dosiert über die zweite Rückfallebene durch den Fahrer gebremst werden kann. Auch könnten bei nicht auflösbaren elektrischen Fehlerfällen bewusst die Spannungsversorgungen abgeschaltet werden, um das Fahrzeug durch einen Fahrer rein pneumatisch sicher Bremsen/Abstellen zu können, was bei Systemen mit rein elektrischen Systemen nicht möglich ist. Optional ist das Steuergerät 118 zum redundanten Einlesen der Raddrehzahlsensorsignale 124, die beispielsweise von Polradsensoren als Raddrehzahlsensoren 122 bereitgestellt werden, und zur redundanten elektrischen Ansteuerung der ABS-Ventile 122 ausgebildet. Dies hat den Vorteil, dass bei Ausfall des elektronischen Bremssystems über die Luftaufbereitungseinheit 102 eine ABS-Regelung gewährleistet werden kann, sofern die Software einer derartigen ABS-Regellogik im Steuergerät 118 implementiert wird.

Durch die Auswertung der Raddrehzahlsensorsignale 124 im Steuergerät 118 kann beispielsweise gewährleistet werden, dass der Bremsweg bei Ausfall des elektronischen Bremssystems stark verkürzt wird, da der Radschlupf bekannt ist und der Bremsdruck somit so weit erhöht werden kann, dass die Räder gerade nicht blockieren.

Beispielhaft sind in Fig. 1 an der Hinterachse des Nutzfahrzeugs keine ABS-Ventile gezeigt, mit denen ein Blockieren der Hinterräder verhindert werden könnte. Gezeigt sind lediglich die Raddrehzahlsensoren 122. Doch auch ohne ABS-Ventile an der Hinterachse kann die Fahrzeugverzögerung allein aufgrund der vorhandenen Raddrehzahlsensorsignale 124 der Raddrehzahlsensoren 122 an der Hinterachse optimiert werden. Durch Regelung des über das Fußbremsmodul 116 eingesteuerten Drucks auf den Schlupf der Hinterachse und Tolerierung eines möglicherweise deutlich erhöhten Vordrucks an der Vorderachse kann mithilfe der Steuerventile 126 ein Blockieren verhindert werden. Dabei ist das Verhältnis zwischen Vorder- und Hinterachsendruck über die Pneumatik des Fußbremsmoduls 116 nicht änderbar voreingestellt.

Mit Blick auf die Anforderungen des autonomen Fahrens ermöglicht dieses System auch bei Ausfall des elektronischen Bremssystems an einer gelenkten Vorderachse einseitige Bremseingriffe, wenn der über das Fußbremsmodul 116 eingesteuerte Druck mittels der Luftaufbereitungseinheit 102 einseitig über eines der ABS-Ventile 126 zur Realisierung einer Bremslenkung zeitgleich entlüftet wird.

Weitere Synergien ergeben sich im Zusammenhang mit einer optional in die Luftaufbereitungseinheit 102 integrierten elektronischen Parkbremse, kurz EPB. Während über die zusätzliche pneumatische Einspeisung eines Steuerdrucks in das Fußbremsmodul 116 lediglich die beiden Betriebsbremskreise betätigt werden, kann mittels des Steuergeräts 118 bei Ausfall des elektronischen Bremssystems und der dazugehörigen Spannungsversorgung, angepasst an die zwei Betriebsbremskreise, auch ein Anhänger- oder Handbremskreis angesteuert werden.

Dies bietet weiteren Auslegungsspielraum für einen optimierten Bremsweg vor dem Hintergrund des vom pneumatischen Fußbremsmodul 116 fest vorgegebenen Druckverhältnisses zwischen Vorder- und Hinterachse. Bei hohem Reibwert und hoher Last auf der Hinterachse sollte die Bremskraft entsprechend hoch sein, was gleichzeitig einen für das Antiblockiersystem möglicherweise zu hohen Steuerdruck an der Vorderachse bedeuten kann. Durch Aufteilung der Bremskräfte an der Hinterachse auf Park- und Betriebsbremse lässt sich der Steuerdruck an der Vorderachse vor den ABS-Ventilen 126 absenken.

Zudem können Fahrerassistenzfunktionen mit Einlegen der Parkbremse abgeschlossen oder mit Lösen der Parkbremse begonnen werden, was sowohl für das Yard-Maneuvering als auch für das sichere Abstellen des Fahrzeugs nach einer Notbremsung von Vorteil sein kann.

Gemäß einem weiteren Ausführungsbeispiel ist das Steuergerät 118 ausgebildet, um im Fall einer Notbremsung gleichzeitig Funktionen der Luftaufbereitung situationsabhängig zu steuern. So können mittels des Steuergeräts 118 nach sicherem Abstellen des Fahrzeugs beispielsweise die Vorratsbehälter der Bremsanlage 100 entlüftet werden, damit die komprimierte Luft des möglicherweise vorgeschädigten Fahrzeugs keine Gefahr für Rettungskräfte darstellt. Ebenfalls kann nach Abschluss von Yard-Maneuvering-Operationen oder vor Ausschalten der Zündung die Filterkartusche 106 durch Ansteuern entsprechender Ventile in der Luftaufbereitungseinheit 102 mittels des Steuergeräts 118 regeneriert werden, um die Haltbarkeit der Filterkartusche 106 zu erhöhen.

Beispielsweise werden die Raddrehzahlsensorsignale 124 parallel an zwei verschiedene Steuergeräte gesendet: in Fig. 1 an das Steuergerät 118 und das EBS-Steuergerät 152, in Fig. 2 an das Steuergerät 118 und das ABS-Steuergerät 202. Hierbei ist es zur Minimierung der Verkabelung vorteilhaft, wenn die Luftaufbereitungseinheit 102 die Raddrehzahlsensorsignale 124 in der Nähe der Druckregelmodule abgreifen kann. Alternativ werden die Raddrehzahlsensorsignale 124 über ein Gateway vom elektronischen Bremssystem weitergeleitet, das beispielsweise elektrisch getrennt vom elektronischen Bremssystem versorgt wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Bremsanlage
- 102: Luftaufbereitungseinheit
- 104: Kompressor
- 106: Filterkartusche
- 107: Filterkartuschenleitung
- 108: Gehäuse
- 110: Ventileinheit
- 112: Verteilereinheit
- 113: Verbindungsleitung
- 114: Fußbremsmodulanschluss
- 116: Fußbremsmodul
- 118: Steuergerät
- 120: Steuersignal
- 122: Raddrehzahlsensor
- 124: Raddrehzahlsensorsignal
- 126: Steuerventil
- 128: Vorderachsenbremszylinder
- 130: Vorderachsenventilmodul
- 132: Hinterachsenventilmodul
- 134: Hinterachsenbremszylinder
- 138: Steueranschluss
- 140: Steuerleitung
- 142: Anhängerventilmodul
- 144: Zusatzanschluss
- 146: Zusatzventileinheit
- 148: Magnetventil
- 150: Relaisventil
- 152: EBS-Steuergerät
- 200: weiteres Steuerventil
- 202: ABS-Steuergerät
- 310: Erzeugungseinheit
- 320: Einleseeinheit
- 400: Verfahren zum Betreiben einer Luftaufbereitungseinheit
- 410: Schritt des Erzeugens

## Patentansprüche

1. Luftaufbereitungseinheit (102) für eine Bremsanlage (100) eines Nutzfahrzeugs, wobei die Luftaufbereitungseinheit (102) folgende Merkmale aufweist:
einen Fußbremsmodulanschluss (114) zum pneumatischen und/oder elektrischen Koppeln der Luftaufbereitungseinheit (102) mit einem Fußbremsmodul (116) der Bremsanlage (100);
zumindest eine Ventileinheit (110) zum Beaufschlagen des Fußbremsmodulanschlusses (114) mit einem Steuerdruck zum Ansteuern des Fußbremsmoduls (116); und
ein Steuergerät (118) zum Ansteuern der Ventileinheit (110), **dadurch gekennzeichnet, dass** das Steuergerät (118) mit zumindest einem Raddrehzahlsensor (122) des Nutzfahrzeugs koppelbar ist und ausgebildet ist, um unter Verwendung eines von dem Raddrehzahlsensor (122) erzeugten Raddrehzahlsensorsignals (124) die Ventileinheit (110) und/oder zumindest ein Steuerventil (126; 200) eines Antiblockiersystems des Nutzfahrzeugs anzusteuern,
wobei das Steuergerät (118) zum Einlesen/Abgreifen von Drehzahlsignalen desselben Raddrehzahlsensors ausgebildet ist, der Drehzahlsignale an ein ABS -/oder EBS-System des Nutzfahrzeugs liefert.

2. Luftaufbereitungseinheit (102) gemäß Anspruch1, bei der das Steuergerät (118) ausgebildet ist, um die Ventileinheit (110) und/oder das Steuerventil (126; 200) unter Verwendung des Raddrehzahlsensorsignals (124) derart anzusteuern, dass das Nutzfahrzeug einseitig abgebremst und/oder gelenkt wird.

3. Luftaufbereitungseinheit (102) gemäß einem der vorangegangenen Ansprüche, mit einer Verteilereinheit (112) zum Verteilen von von der Luftaufbereitungseinheit (102) aufbereiteter Luft auf zumindest einen einer Betriebsbremse der Bremsanlage (100) zugeordneten Bremskreis und zumindest einer Verbindungsleitung (113) zum Verbinden der Verteilereinheit (112) mit dem Fußbremsmodulanschluss (114), wobei die Ventileinheit (110) in der Verbindungsleitung (113) angeordnet ist, insbesondere wobei die Verbindungsleitung (113) Teil eines Bremskreises ist, insbesondere wobei die Ventileinheit (110) auch aus mehreren Bremskreisen gespeist werden kann.

4. Luftaufbereitungseinheit (102) gemäß einem der vorangegangenen Ansprüche, bei der das Steuergerät (118) ausgebildet ist, um die Ventileinheit (110) ansprechend auf einen Ausfall eines elektronischen Bremssystems des Nutzfahrzeugs anzusteuern.

5. Luftaufbereitungseinheit (102) gemäß einem der vorangegangenen Ansprüche, mit zumindest einem Zusatzanschluss (144) zum pneumatischen Koppeln der Luftaufbereitungseinheit (102) mit einem Park- und/oder Anhängerbremskreis (der Bremsanlage (100) und zumindest einer Zusatzventileinheit (146) zum Beaufschlagen des Zusatzanschlusses (144) mit einem Zusatzsteuerdruck, wobei das Steuergerät (118) ausgebildet ist, um ferner die Zusatzventileinheit (146) anzusteuern, insbesondere um die Zusatzventileinheit (146) gleichzeitig mit dem Fussbremsmodul anzusteuern.

6. Luftaufbereitungseinheit (102) gemäß einem der vorangegangenen Ansprüche, wobei die Ventileinheit (110) unbestromt einen drucklosen Ausgang aufweist.

7. Luftaufbereitungseinheit (102) gemäß einem der vorangegangenen Ansprüche, wobei die Venteileinheit (110) ausgebildet ist, um eines von mehreren Ventilen auszuwählen.

8. Luftaufbereitungseinheit (102) gemäß einem der vorangegangenen Ansprüche, wobei das Steuergerät (118) zum Einlesen von Drehzahlsignalen über redundante, zusätzliche Drehzahlsensoren ausgebildet ist, wobei die redundanten, zusätzlichen Drehzahlsensoren ausgebildet sind, um Informationen für eine elektronische Luftaufbereitungseinheit zu liefern.

9. Luftaufbereitungseinheit (102) gemäß einem der vorangehenden Ansprüche, wobei das Steuergerät (118) zum Einlesen zumindest eines Drehzahlsensorsignals über einen CAN-Datenbus ausgebildet ist.

10. Verfahren (400) zum Betreiben einer Luftaufbereitungseinheit (102) gemäß einem der Ansprüche 1 bis t9, wobei das Verfahren (400) folgenden Schritt umfasst: Erzeugen (410) eines Steuersignals (120), um die Ventileinheit (110) derart anzusteuern, dass der Fußbremsmodulanschluss (114) mit dem Steuerdruck beaufschlagt wird.

11. Computerprogramm, das ausgebildet ist, um das Verfahren (400) gemäß Anspruch 10 auszuführen.

12. Maschinenlesbares Speichermedium, auf dem das Computerprogramm nach Anspruch 11 gespeichert ist.

## Claims

1. Air treatment unit (102) for a brake system (100) of a commercial vehicle, wherein the air treatment unit (102) has the following features:
a foot brake module connection (114) for pneumatically and/or electrically coupling the air treatment unit (102) to a foot brake module (116) of the brake system (100);
at least one valve unit (110) for charging the foot brake module connection (114) with a control pressure for activating the foot brake module (116); and
a control device (118) for activating the valve unit (110),
**characterised in that** the control device (118) can be coupled to at least one wheel rotational speed sensor (122) of the commercial vehicle and is designed to activate the valve unit (110) and/or at least one control valve (126; 200) of an anti-lock brake system of the commercial vehicle using a wheel speed sensor signal (124) generated by the wheel speed sensor (122), wherein the control device (118) is designed to read in/pick up speed signals of the wheel speed sensor which supplies speed signals to an ABS or EBS system of the commercial vehicle.

2. Air treatment unit (102) according to claim 1, wherein the control device (118) is designed to activate the valve unit (110) and/or the control valve (126; 200) using the wheel speed sensor signal (124), in such a manner that the commercial vehicle is braked and/or steered on one side.

3. Air treatment unit (102) according to any of the preceding claims, with a distribution unit (112) for distributing air treated by the air treatment unit (102) to at least one brake circuit assigned to a service brake of the brake system (100), and at least one connecting line (113) for connecting the distribution unit (112) to the foot brake module connection (114), wherein the valve unit (110) is arranged in the connecting line (113), in particular wherein the connecting line (113) is part of a brake circuit, in particular wherein the valve unit (110) can also be fed from a plurality of brake circuits.

4. Air treatment unit (102) according to any of the preceding claims, wherein the control device (118) is designed to activate the valve unit (110) in response to a failure of an electronic brake system of the commercial vehicle.

5. Air treatment unit (102) according to any of the preceding claims, with at least one additional connection (144) for pneumatically coupling the air treatment unit (102) to a parking and/or trailer brake circuit of the brake system (100), and at least one additional valve unit (146) for charging the additional connection (144) with an additional control pressure, wherein the control device (118) is designed furthermore to activate the additional valve unit (146), in particular to activate the additional valve unit (146) simultaneously with the foot brake module.

6. Air treatment unit (102) according to any of the preceding claims, wherein the valve unit (110) when not energised has an unpressurised output.

7. Air treatment unit (102) according to any of the preceding claims, wherein the valve unit (110) is designed to select one of a plurality of valves.

8. Air treatment unit (102) according to any of the preceding claims, wherein the control device (118) is designed to read speed signals via redundant additional speed sensors, wherein the redundant additional speed sensors are designed to supply information for an electronic air treatment unit.

9. Air treatment unit (102) according to any of the preceding claims, wherein the control device (118) is designed to read in at least one speed sensor signal via a CAN data bus.

10. Method (400) for operating an air treatment unit (102) according to any of claims 1 to 11, wherein the method (400) comprises the following step:
generating (410) a control signal (120) in order to activate the valve unit (110) in such a manner that the foot brake module connection (114) is charged with the control pressure.

11. Computer programme designed to carry out the method (400) according to claim 10.

12. Machine-readable storage medium on which the computer programme according to claim 11 is stored.

## Revendications

1. Unité (102) de traitement de l'air pour un système (100) de freinage d'un véhicule utilitaire, l'unité (102) de traitement de l'air ayant les caractéristiques suivantes :
un raccord (114) de module de frein au pied pour la liaison pneumatique et/ou électrique de l'unité (102) de traitement de l'air à un module (116) de frein au pied du système (100) de frein ;
au moins une unité (110) de vanne pour l'application au raccord (114) du module de frein au pied d'une pression de commande pour la commande du module (116) de frein au pied ; et
un appareil (118) de commande pour commander l'unité (110) de vanne,
**caractérisée en ce que** l'appareil (118) de commande peut être relié à au moins un capteur (122) de vitesse de rotation de roue du véhicule utilitaire et est constitué pour, en utilisant un signal (124) de capteur de vitesse de rotation de roue produit par le capteur (122) de vitesse de rotation de roue, commander l'unité (110) de vanne et/ou au moins une vanne (126; 200) de commande d'un système d'antiblocage du véhicule utilitaire,
dans laquelle l'appareil (118) de commande est constitué pour la lecture et/ou la prise de signaux de vitesse de rotation du même capteur de vitesse de rotation de roue, que celui qui fournit des signaux de vitesse de rotation à un système ABS/ou EBS du véhicule utilitaire.

2. Unité (102) de traitement de l'air suivant la revendication 1, dans laquelle l'appareil (118) de commande est constitué pour commander l'unité (110) de vanne et/ou la vanne (126; 200) de commande, en utilisant le signal (124) de capteur de vitesse de rotation de roue, de manière à freiner et/ou à faire tourner d'un côté le véhicule utilitaire.

3. Unité (102) de traitement de l'air suivant l'une des revendications précédentes, comprenant une unité (112) de répartition, pour répartir de l'air traité par l'unité (102) de traitement de l'air sur au moins un circuit de frein associé à un frein de service du système (100) de frein, et au moins une ligne (113) de liaison pour relier l'unité (112) de répartition au raccord (114) du module de frein au pied, l'unité (110) de vanne étant montée dans la ligne (113) de liaison, dans laquelle, notamment, la ligne (113) de liaison fait partie d'un circuit de frein, dans laquelle, notamment, l'unité (110) de vanne peut être alimentée également à partir de plusieurs circuits de frein.

4. Unité (102) de traitement de l'air suivant l'une des revendications précédentes, dans laquelle l'appareil (118) de commande est constitué pour commander l'unité (110) de vanne en réaction à une défaillance d'un système électronique de frein du véhicule utilitaire.

5. Unité (102) de traitement de l'air suivant l'une des revendications précédentes, comprenant au moins un raccord (144) supplémentaire, pour la liaison pneumatique de l'unité (102) de traitement de l'air à un circuit de frein de stationnement et/ou de remorque du système (100) de frein, et au moins une unité (146) de vanne supplémentaire, pour appliquer au raccord (144) supplémentaire une pression de commande supplémentaire, l'appareil (118) de commande étant constitué pour commander, en outre, l'unité (146) de vanne supplémentaire, notamment pour commander l'unité (146) de vanne supplémentaire en même temps que le module de frein au pied.

6. Unité (102) de traitement de l'air suivant l'une des revendications précédentes, dans laquelle l'unité (110) de vanne a, lorsqu'elle n'est pas alimentée en courant, une sortie sans pression.

7. Unité (102) de traitement de l'air suivant l'une des revendications précédentes, dans laquelle l'unité (110) de vanne est constituée pour sélectionner l'une de plusieurs vannes.

8. Unité (102) de traitement de l'air suivant l'une des revendications précédentes, dans laquelle l'appareil (118) de commande est constitué pour lire les signaux de vitesse de rotation par l'intermédiaire de capteurs de vitesse de rotation supplémentaires redondants, les capteurs de vitesse de rotation supplémentaires redondants étant constitués pour fournir des informations à une unité électronique de traitement de l'air.

9. Unité (102) de traitement de l'air suivant l'une des revendications précédentes, dans laquelle l'appareil (118) de commande est constitué pour lire au moins un signal de capteur de vitesse de rotation par l'intermédiaire d'un bus de données CAN.

10. Procédé (400) pour faire fonctionner une unité (102) de traitement de l'air suivant l'une des revendications 1 à 9, le procédé (400) comprenant le stade suivant :
production (410) d'un signal (120) de commande pour commander l'unité (110) de vanne, de manière à appliquer la pression de commande au raccord (114) du module de frein au pied.

11. Programme d'ordinateur constitué pour exécuter le procédé suivant la revendication 10.

12. Support de mémoire déchiffrable par ordinateur, sur lequel le programme d'ordinateur suivant la revendication 11 est mis en mémoire.
